# EUROPÄISCHE PATENTANMELDUNG

(11) **EP 1 246 484 A2**
(43) Veröffentlichungstag der Anmeldung: **02.10.2002**
(21) Anmeldenummer: 02003159.7
(22) Anmeldetag: 15.02.2002
(51) Int. Cl.: H04Q 7/30

(54) **Verfahren und Basisstation zur Basisband-Verarbeitung von Empfangssignalen**

(30) Priorität: 29.03.2001 DE 10115610
(71) Anmelder: ALCATEL, 75008 Paris (FR)
(72) Erfinder: Blanke, Gero, 71711 Murr (DE)
(74) Vertreter: Dreiss, Fuhlendorf, Steimle & Becker

(57) **Zusammenfassung**

Die Erfindung betrifft ein Verfahren zur Basisband-Verarbeitung von Empfangssignalen (2) in mindestens einem Basisband-Block (4) einer Basisstation (Node B) eines Funktelekommunikationssystems (1), wobei der oder jeder Basisband-Block (4) mindestens ein Rechengerät (8), insbesondere einen Mikroprozessor, aufweist. Um in der Basisstation (Node B) eine Basisband-Verarbeitung zu realisieren, bei der einerseits Hardware eingespart werden kann und andererseits eine ausreichende Rechenkapazität zur Verfügung steht, damit auch für Empfangssignale (2) von schlechter Qualität eine Verarbeitung innerhalb einer vorgegebenen Zeitdauer und mit einer vorgegebenen Qualität sichergestellt werden kann, wird vorgeschlagen, dass die Basisband-Verarbeitung in Abhängigkeit von der Auslastung der Rechengeräte (8) der Basisband-Blöcke (4) mindestens einem bestimmten Rechengerät (8) mindestens eines Basisband-Blocks (4) zugewiesen wird.

## Beschreibung

Die vorliegende Erfindung betrifft ein Verfahren zur Basisband-Verarbeitung von Empfangssignalen in mindestens einem Basisband-Block einer Basisstation eines Funktelekommunikationssystems. Der oder jeder Basisband-Block weist mindestens ein Rechengerät, insbesondere einen Mikroprozessor, auf.

Die Erfindung betrifft außerdem eine Basisstation eines Funktelekommunikationssystems, umfassend mindestens einen Hochfrequenz (HF)-Block zum Verarbeiten analoger Signale und mehrere Basisband-Blöcke zum Verarbeiten digitaler Signale. Die Basisband-Blöcke weisen jeweils mindestens ein Rechengerät, insbesondere einen Mikroprozessor, auf.

Schließlich betrifft die vorliegende Erfindung ein Funktelekommunikationssystem umfassend eine Vielzahl von mobilen Funkeinheiten, mehrere Basisstationen, die in einem Funkkontakt mit den mobilen Funkeinheiten stehen, und mindestens eine Steuerungsvorrichtung zum Steuern des Funktelekommunikationssystems, die mit den Basisstationen in Verbindung steht.

Ein derartiges Funktelekommunikationssystem mit Basisstationen der eingangs genannten Art ist bspw. als ein sog. Universal Mobile Telecommunications System (UMTS)-Funktelekommunikationssystem aus dem Stand der Technik bekannt. In UMTS-Funktelekommunikationssystemen werden die Basisstationen als NodeB und die Steuerungsvorrichtungen als Radio Network Controller (RNC) bezeichnet. In einem sog. Uplink-Betrieb werden Informationen von den mobilen Funkeinheiten über eine Funkverbindung zu den Basisstationen übertragen. Die Informationen von verschiedenen Funkeinheiten werden nach dem sog. Code Division Multiple Access (CDMA)-Verfahren moduliert und über einen gemeinsamen Kanal übertragen. Mehrere Kanäle werden zu einem Funksignal zusammengefasst, das als Empfangssignal in denjenigen Basisstationen empfangen wird, mit denen die Funkeinheiten in einem Funkkontakt stehen. In den Basisstationen werden die Empfangssignale verarbeitet.

Die Verarbeitung der Empfangssignale in den Basisstationen erfolgt getrennt nach analogen und digitalen Signalen. Während die analogen Signale in sog. Hochfrequenz (HF)-Blöcken verarbeitet werden, werden die digitalen Signale in sog. Basisband-Blöcken verarbeitet. Die digitale Verabeitung in den Basisband-Blöcken umfasst bei nach dem CDMA-Verfahren modulierten Signalen u.a. das sog. Symbol-Rate-Processing und das sog. Chip-Rate-Processing. Das Chip-Rate-Processing wird zur Rückgewinnung der einzelnen Kanäle aus dem Empfangssignal angewandt. Das Symbol-Rate-Processing wird auf einen einzelnen Kanal angewandt, um aus dem über den Kanal übertragenen Signal die übertragenen Informationen der einzelnen Funkeinheiten zurückzugewinnen.

Die Basisstationen empfangen Signale über verschiedene Kanäle. Nach dem Stand der Technik ist in einer Basisstation für die Verarbeitung der analogen und digitalen Signale ein festgelegter Bezug vorgesehen zwischen einem Kanal und den HF-Blöcken bzw. den Basisband-Blöcken, die die Signale dieses Kanals verarbeiten. Dieser festgelegte Bezug setzt jedoch einen im wesentlichen konstanten Aufwand für die Basisband-Verarbeitung voraus. Insbesondere bei modernen Funktelekommunikationssystemen, wie bspw. UMTS-Telekommunikationssystemen, ist der Aufwand für die Basisband-Verarbeitung, insbesondere für das Chip-Rate-Processing, wie es bspw. bei einem sogenannten Rake-Empfänger zur Anwendung kommt, nicht konstant, sondern hängt von der Qualität des Empfangssignals ab, d.h. von der Anzahl der Finger eines Rake-Empfängers, die zum Empfang eines Signals mit einer bestimmten Qualität erforderlich sind. Die für die Basisband-Verarbeitung erforderliche Rechenkapazität für die Empfangssignale eines Kanals kann somit stark variieren. Um stets eine ausreichende Rechenkapazität zur Verfügung zu haben, ist es erforderlich diese relativ groß auszulegen, damit selbst im ungünstigsten Fall eine Verarbeitung des Empfangssignals innerhalb einer vorgebbaren Zeit und mit einer vorgebbaren Qualität gewährleistet werden kann. Im Mittel werden jedoch große Teile dieser zur Verfügung stehenden Rechenkapazität nicht benötigt, da die Qualität des Empfangssignals in der Regel besser als der ungünstigste Fall ist.

Der vorliegenden Erfindung liegt deshalb die Aufgabe zugrunde, in Basisstationen von Funktelekommunikationssystemen eine Basisband-Verarbeitung zu realisieren, bei der einerseits in der Basisstation Hardware eingespart werden kann und andererseits eine ausreichende Rechenkapazität zur Verfügung steht, damit auch für Empfangssignale von schlechter Qualität eine Verarbeitung innerhalb einer bestimmten Zeitdauer und mit einer bestimmten Qualität sichergestellt werden kann.

Zur Lösung dieser Aufgabe wird ausgehend von dem Verfahren der eingangs genannten Art vorgeschlagen, dass die Basisband-Verarbeitung in Abhängigkeit von der Auslastung der Rechengeräte der Basisband-Blöcke mindestens einem bestimmten Rechengerät mindestens eines Basisband-Blockes zugewiesen wird.

Erfindungsgemäß wird also vorgeschlagen, zunächst die Auslastung der einzelnen Rechengeräte der Basisband-Blöcke zu bestimmen. In Abhängigkeit von der Auslastung der Rechengeräte wird dann die Basisband-Verarbeitung eines zur Verarbeitung anstehenden Empfangssignals mindestens einem bestimmten Rechengerät mindestens eines Basisband-Blocks zugewiesen. Gemäß der vorliegenden Erfindung ist es möglich, die gesamte Basisband-Verarbeitung einem Rechengerät eines Basisband-Blocks zuzuweisen, das über eine geforderte Rechenkapazität verfügt. Es ist jedoch auch denkbar, die Basisband-Verarbeitung auf mehrere Rechengeräte eines oder mehrerer Basisband-Blöcke aufzuteilen, die in ihrer Gesamtheit dann die geforderte Rechenkapazität zur Verfügung stellen können. Kern der vorliegenden Erfindung ist es also, die aus dem Stand der Technik bekannte starre Zuordnung zwischen HF-Blöcken und Basisband-Blöcken durch eine auslastungsabhängige adaptive Zuordnung zu ersetzen.

Es kann umso mehr Hardware in einer Basisstation eingespart werden, desto gleichmäßiger die Basisband-Verarbeitung auf sämtliche Rechengeräte sämtlicher Basisband-Blöcke aufgeteilt werden kann. Innerhalb der Kanäle, die sich die Rechenkapazität der Rechengeräte der Basisband-Blöcke einer Basisband-Rechnerkarte (Basisband-Bord) zur Basisband-Verarbeitung eines Trägers teilen, kann bereits aufgrund einer statistischen Verteilung der Qualität der Empfangssignale von einem gewissen Ausgleich zwischen den Kanälen innerhalb des Basisband-Bords ausgegangen werden. Dennoch ist es möglich, dass ein Basisband-Bord, das ursprünglich für einen bestimmten Träger ausgelegt war, anderen Basisband-Bords Rechenkapazität zur Verfügung stellen kann oder selbst zusätzliche Rechenkapazität von anderen Basisband-Bords benötigt.

Gemäß einer möglichen Ausführungsform wird eine Schaltmatrix zwischen die analogen Verarbeitungsteile der Basisstation (HF-Blöcke) einerseits und die digitalen Basisband-Verarbeitungseinheiten (Basisband-Blöcke) andererseits angeordnet. Die Schaltmatrix muss die relativ hohen Datenraten verarbeiten können, die zwischen einem Sende-/Empfangsgerät (Transceiver) eines HF-Blocks und einem Basisband-Block auftreten, der freie Rechenkapazitäten hat. Dazu weist die Schaltmatrix bspw. optische Übertagungsmittel auf.

Um das Schalten der hohen Datenraten bei der Schaltmatrix jedoch zu vermeiden, wird gemäß einer vorteilhaften Weiterbildung der vorliegenden Erfindung vorgeschlagen, dass die Basisband-Verarbeitung mindestens einem bestimmten Rechengerät mindestens eines bestimmten Basisband-Blocks zugeordnet ist und dass die Basisband-Verarbeitung innerhalb des Basisband-Blocks zumindest teilweise mindestens einem weiteren Rechengerät des Basisband-Blocks zugewiesen wird. Gemäß dieser Weiterbildung wird also die Basisband-Verarbeitung mehreren Rechengeräten desselben Basisband-Blocks zugewiesen. Der Ausgleich der Rechenkapazitäten findet also zwischen den Rechengeräten desselben Basisband-Blocks statt.

Gemäß einer anderen vorteilhaften Weiterbildung der vorliegenden Erfindung wird vorgeschlagen, dass die Basisband-Verarbeitung mindestens einem bestimmten Rechengerät mindestens eines Basisband-Blocks zugeordnet ist und dass die Basisband-Verarbeitung zumindest teilweise einem weiteren Rechengerät mindestens eines weiteren Basisband-Blocks zugewiesen wird. Gemäß dieser Weiterbildung wird also die Rechenkapazität zwischen den Rechengeräten mehrerer Basisband-Blöcke desselben oder verschiedener Basisband-Bords ausgeglichen.

Gemäß einer bevorzugten Ausführungsform der vorliegenden Erfindung wird vorgeschlagen, dass die Empfangssignale über mehrere Kanäle übertragen werden, wobei jedem Rechengerät mindestens ein Kanal zugeordnet wird, und dass die Basisband-Verarbeitung eines Kanals zumindest teilweise einem weiteren Rechengerät zugewiesen wird, falls die verfügbare Rechenkapazität des dem Kanal zugeordneten mindestens einem Rechengerät nicht ausreicht. Falls über einen bestimmten Kanal ein Empfangssignal mit einer relativ schlechten Qualität übertragen wird und die verfügbare Rechenkapazität des diesem Kanal zugeordneten Rechengeräts nicht ausreicht, das Empfangssignal innerhalb einer vorgegebenen Rechenzeit und mit einer vorgegebenen Qualität zu verarbeiten, wird zur Basisbandverarbeitung des über diesen Kanal übertragenen Empfangssignals mindestens ein weiteres Rechengerät herangezogen. Das weitere Rechengerät kann als erste Möglichkeit zusätzlich zu dem ursprünglichen Rechengerät an der Basisband-Verarbeitung teilnehmen oder aber das weitere Rechengerät übernimmt als zweite Möglichkeit die vollständige Basisband-Verarbeitung von dem ursprünglichen Rechengerät. Die zweite Möglichkeit ist bspw. dann denkbar, wenn die volle Rechenkapazität des weiteren Rechengeräts zur Verfügung steht, wohingegen das ursprüngliche Rechengerät teilweise mit der Basisband-Verarbeitung von anderen Kanälen des Empfangssignals beschäftigt ist.

Vorteilhafterweise wird die zu erwartende verfügbare Rechenkapazität des dem Kanal zugeordneten mindestens einen Rechengeräts vor Beginn der Basisband-Verarbeitbung abgeschätzt. Bevor mit der eigentlichen Basisband-Verarbeitung begonnen wird, kann die erwartete verfügbare Rechenkapazität anhand der Gesamt-Rechenkapazität des mindestens einen Rechengeräts und einer zu erwartenden Auslastung ermittelt werden. Die zu erwartende Auslastung des mindestens einen Rechengeräts kann anhand des Inhalts der Daten des Empfangssignals und anhand von Befehlen einer Kontrolleinheit der Basisstation vor Beginn der Basisband-Verarbeitung abgeschätzt werden. Falls die zu erwartende verfügbare Rechenkapazität des mindestens einen Rechengeräts unterhalb eines vorgebbaren Schwellenwerts liegt, wird zur Entlastung mindestens ein weiteres Rechengerät zur Basisband-Verarbeitung herangezogen oder die gesamte Basisband-Verarbeitung auf das mindestens eine weitere Rechengerät umgeleitet.

Alternativ oder zusätzlich wird vorgeschlagen, die Auslastung des dem Kanal zugeordneten mindestens einen Rechengeräts während der Basisband-Verarbeitung zu überwachen. Falls sich während der Basisband-Verarbeitung zeigt, dass die verfügbare Rechenkapazität des dem Kanal zugeordneten mindestens einen Rechengeräts unter einen vorgebbaren Schwellenwert sinkt, wird mindestens ein weiteres Rechengerät zur Basisband-Verarbeitung herangezogen oder die gesamte Basisband-Verarbeitung auf das mindestens eine weitere Rechengerät umgeleitet.

Als eine weitere Lösung der Aufgabe der vorliegenden Erfindung wird ausgehend von der Basisstation der eingangs genannten Art vorgeschlagen, dass die Bassistation erste Mittel zum Bestimmen der Auslastung der Rechengeräte der Basisband-Blöcke und zweite Mittel zum Zuweisen von zur Basisband-Verarbeitung anstehenden Empfangssignalen an mindestens ein Rechengerät mindestens eines Bassiband-Blocks aufweist, wobei die Zuweisung in Abhängigkeit von der Auslastung der Rechengeräte erfolgt.

Gemäß einer vorteilhaften Weiterbildung der vorliegenden Erfindung wird vorgeschlagen, dass die Rechengeräte der Basisband-Blöcke über Hochgeschwindigkeitsschnittstellen miteinander in Verbindung stehen. Die Hochgeschwindigkeitsschnittstellen sind bspw. als sogenannte Linkports ausgebildet, die zum Anschluss von Peripherieeinheiten oder von anderen Rechengeräten des gleichen Typs ausgelegt sind. Über die Verbindungen zwischen den einzelnen Rechengeräten können die zur Basisband-Verarbeitung anstehenden Empfangssignale auf verschiedene Rechengeräte verteilt werden. Die Verteilung der Empfangssignale auf die verschiedenen Rechengeräte kann bspw. von einer Kontrolleinheit, z.B. einem Co-Prozessor oder einer Direct Memory Access (DMA)-Maschine, koordiniert werden. Um die zur Bearbeitung anstehenden Empfangssignale auf die verschiedenen Rechengeräte zu verteilen, werden die Daten der Empfangssignale in den Speicherelementen der entsprechenden Rechengeräte abgelegt. Aus den Speicherelementen werden sie von den Rechengeräten dann zur Verarbeitung abgerufen.

Die Ausführungsform mit der Verbindung der Rechengeräte über Hochgeschwindigkeitsschnittstellen hat gegenüber einer Schaltmatrix den Vorteil, dass sie wesentlich einfacher und kostengünstiger zu realisieren ist, da kein hardwaremäßig aufwendiges schnelles Schalten der hohen Datenraten zwischen den HF-Blöcken und den Basisband-Blöcken notwendig ist. Durch eine geeignete Vorverarbeitung der Empfangssignale in den Rechengeräten der Basisband-Blöcke kann die Datenrate über die Hochgeschwindigkeitsschnittstellen deutlich reduziert werden.

Die zweiten Mittel zum Zuweisen der Empfangssignale an das mindestens eine Rechengerät sind vorzugsweise als eine Kontrolleinheit ausgebildet, die die zur Basisband-Verarbeitung anstehenden Empfangssignale in einen Speicherbereich des mindestens einen Rechengeräts leitet.

Als noch eine weitere Lösung der Aufgabe der vorliegenden Erfindung wird ausgehend von einem Funktelekommunikationssystem der eingangs genannten Art vorgeschlagen, dass zumindest eine der Basisstationen des Funktelekommunikationssystems als eine erfindungsgemäße Basisstation ausgebildet ist.

Weitere Merkmale, Anwendungsmöglichkeiten der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein erfindungsgemäßes Funktelekommunikationssystem;
- Figur 2: eine erfindungsgemäße Basisstation; und
- Figur 3: ein Ablaufdiagramm eines erfindungsgemäßen Verfahrens.

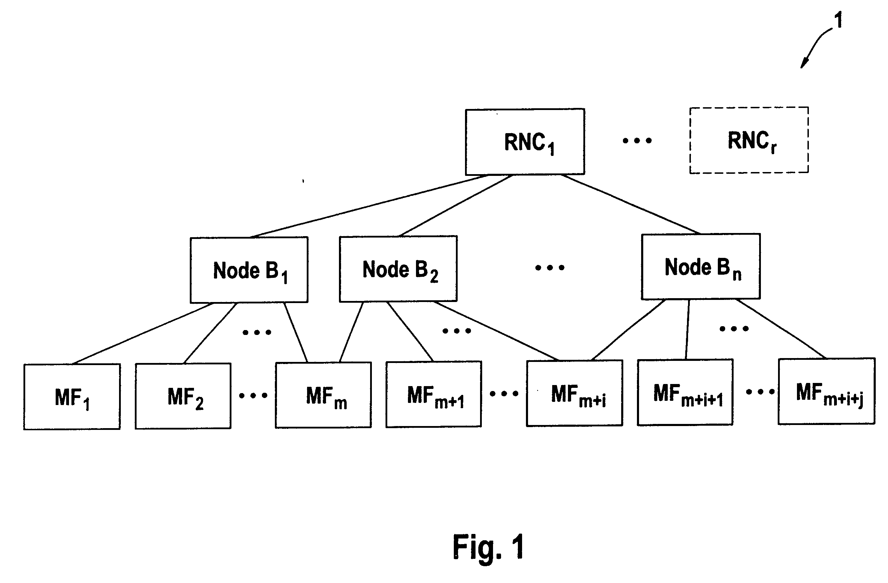

In Fig. 1 ist ein erfindungsgemäßes Universal Mobile Telecommunications System (UMTS)-Funktelekommunikationssystem in seiner Gesamtheit mit dem Bezugszeichen 1 bezeichnet. Das Funktelekommunikationssystem 1 umfasst eine Vielzahl von mobilen Funkeinheiten MF, mehrere Basisstationen Node B, die in einem Funkkontakt mit den mobilen Funkeinheiten MF stehen, und mindestens eine Steuerungsvorrichtung RNC (Radio Network Controller), die mit den Basisstationen Node B in Verbindung steht. In einem sog. Uplink-Betrieb werden Informationen von den mobilen Funkeinheiten MF über die Funkverbindung zu den Basisstationen Node B übertragen. Die Informationen von verschiedenen Funkeinheiten MF werden nach dem sog. Code Division Multiple Access (CDMA)-Verfahren moduliert und über einen gemeinsamen Kanal übertragen. Mehrere Kanäle werden zu einem Funksignal zusammengefasst, das als Empfangssignal 2 in denjenigen Basisstationen Node B empfangen wird, mit denen die Funkeinheiten MF in einem Funkkontakt stehen. In den Basisstationen Node B werden die Empfangssignale 2 verarbeitet.

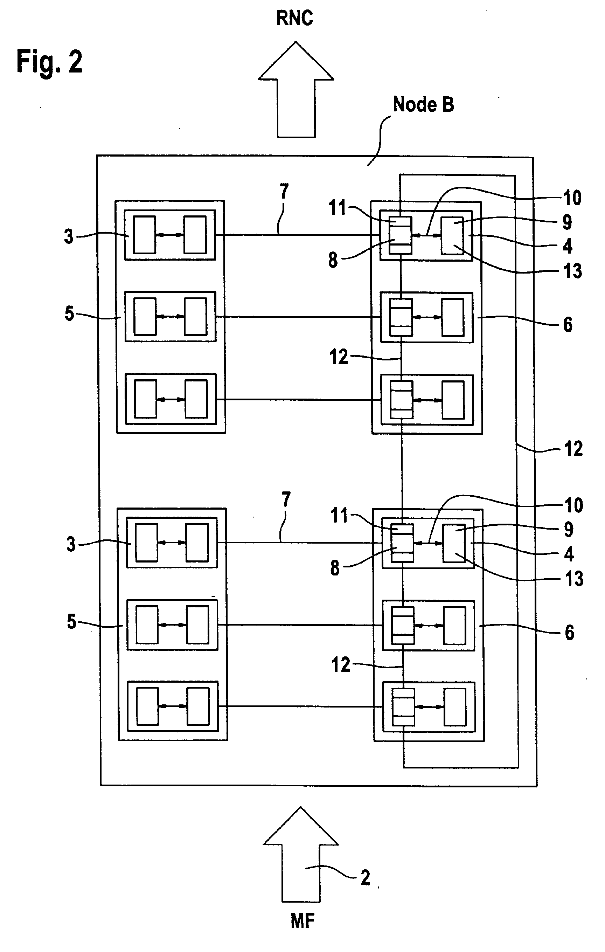

Die Verarbeitung der Empfangssignale 2 (vgl. Fig. 2) in den Basisstationen Node B erfolgt getrennt nach analogen und digitalen Signalen. Während die analogen Signale in sog. Hochfrequenz (HF)-Blöcken 3 verarbeitet werden, werden die digitalen Signale in sog. Basisband-Blöcken 4 verarbeitet. Mehrere HF-Blöcke 3 sind zu einem HF-Bord 5 und mehrere Basisband-Blöcke 4 zu einem Basisband-Bord 6 zusammengefaßt. Die HF-Blöcke 3 und die Basisband-Blöcke 4 weisen jeweils ein Rechengerät 8, insbesondere einen Mikroprozessor, und eine Speichereinrichtung 9 auf, in der zu verarbeitende Informationen abgelegt werden können. Über eine Übertragungsleitung 10 werden die Daten von der Speichereinrichtung 9 zur Verarbeitung in das Rechengerät 8 übertragen.

Die digitale Verabeitung in den Basisband-Blöcken 4 umfasst bei nach dem CDMA-Verfahren modulierten Signalen 2 u.a. das sog. Symbol-Rate-Processing und das sog. Chip-Rate-Processing. Das Chip-Rate-Processing wird zur Rückgewinnung der einzelnen Kanäle aus dem Empfangssignal 2 angewandt. Das Symbol-Rate-Processing wird auf einen einzelnen Kanal angewandt, um aus dem über den Kanal übertragenen Signal die übertragenen Informationen der einzelnen Funkeinheiten MF zurückzugewinnen.
Die Basisstationen Node B empfangen Signale über verschiedene Kanäle. Nach dem Stand der Technik ist in einer Basisstation Node B für die Verarbeitung der analogen und digitalen Signale ein festgelegter Bezug vorgesehen zwischen einem Kanal und den HF-Blöcken 3 bzw. den Basisband-Blöcken 4, die die Signale dieses Kanals verarbeiten. Dieser starre Bezug ist durch die Verbindungsleitungen 7 zwischen jeweils einem HF-Block 3 und jeweils einem Basisband-Block 4 verdeutlicht. Kern der vorliegenden Erfindung ist es, die aus dem Stand der Technik bekannte starre Zuordnung zwischen HF-Blöcken 3 und Basisband-Blöcken 4 durch eine auslastungsabhängige adaptive Zuordnung zu ersetzen. Dadurch kann insbesondere bei modernen Funktelekommunikationssystemen, wie bspw. UMTS-Telekommunikationssystemen 1, die Rechenkapazität der Basisstationen Node B an die tatsächlichen Erfordernisse angepaßt werden. Die tatsächlich erforderliche Rechenkapazität, um ein Empfangssignal 2 innerhalb einer vorgebbaren Zeitdauer mit einer vorgebbaren Qualität zu verarbeiten, kann nämlich stark schwanken, da sie von der Qualität des Empfangssignals 2 abhängt. Dies gilt insbesondere für das Chip-Rate-Processing, wie es bspw. bei einem sogenannten Rake-Empfänger in den Basisstationen Node B zur Anwendung kommt. Bei einem Rake-Empänger nimmt der Rechenaufwand, aber auch die Qualität des Signals mit der Anzahl der Finger zu.

Bei den erfindungsgemäßen Basisstationen Node B kann also die Rechenkapazität der Basisband-Blöcke 3 verringert werden. Die verringerte Rechenkapazität ermöglicht für Empfangssignale 2 herkömmlicher Qualität eine ausreichend schnelle und ausreichend gute Verarbeitung. Bei Empfangssignalen 2 mit einer schlechteren Qualität, für die die vorgesehene Rechenkapazität möglicherweise nicht ausreicht, kann die Verarbeitung auf mehrere Rechengeräte 8 eines oder mehrerer Basisband-Blöcke 4 eines oder mehrerer Basisband-Bords 6 verteilt oder einem Rechengerät 8 zugewiesen werden, dessen Rechenkapazität voll zur Verfügung steht.

Die auslastungsabhängige adaptive Zuordnung der Empfangssignale 2 an die Rechengeräte 8 wird dadurch ermöglicht, dass die einzelnen Rechengeräte 8 der Basisband-Blöcke 4 über eine Hochgeschwindigkeitsschnittstelle 11 untereinander in Verbindung stehen. Die Hochgeschwindigkeitsschnittstellen 11 sind als sog. Linkports ausgebildet, die zum Anschluss von Peripherieeinheiten oder von anderen Rechengeräten des gleichen Typs ausgelegt sind. Über die Verbindungen 12 zwischen den einzelnen Rechengeräten 8 können die zur Basisband-Verarbeitung anstehenden Empfangssignale 2 auf verschiedene Rechengeräte 8 der Basisband-Blöcke 4 verteilt werden. Die Verteilung der Empfangssignale 2 auf die verschiedenen Rechengeräte 8 wird von einer Kontrolleinheit, z.B. einem Co-Prozessor oder einer Direct Memory Access (DMA)-Maschine, koordiniert. Um die zur Bearbeitung anstehenden Empfangssignale 2 auf die verschiedenen Rechengeräte 8 zu verteilen, werden die Daten der Empfangssignale 2 in Speicherelementen 13 der entsprechenden Rechengeräte 8 abgelegt und von dort von den Rechengeräten 8 zur Verarbeitung abgerufen.

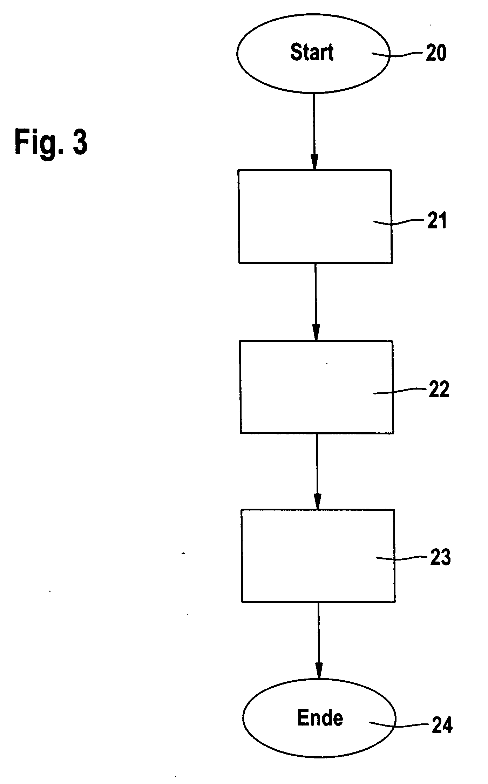

In Fig. 3 ist ein Ablaufdiagramm des erfindungsgemäßen Verfahrens dargestellt. Das Verfahren beginnt in einem Funktionsblock 20. Dann wird in einem Funktionsblock 21 die Auslastung der Rechengeräte 8 der Basisband-Blöcke 4 ermittelt. Das kann eine aktuelle Auslastung oder eine zukünftig zu erwartende Auslastung sein. In einem Funktionsblock 22 werden dann die zur Basisband-Verarbeitung anstehenden Daten in Abhängigkeit von der Auslastung der Rechengeräte 8 auf eines oder mehrere Rechengeräte 8 verteilt. Bei einer Verteilung auf mehrere Rechengeräte 8, können aber müssen diese nicht unbedingt dem gleichen Basisband-Block 4 bzw. dem gleichen Basisband-Bord 6 angehören. In einem Funktionsblock 23 werden die Daten dann von den Rechengeräten 8 innerhalb einer vorgegebenen Zeitdauer und mit einer vorgebenen Qualität verarbeitet. In einem Funktionsblock 24 ist das Verfahren beendet.

## Patentansprüche

1. Verfahren zur Basisband-Verarbeitung von Empfangssignalen (2) in mindestens einem Basisband-Block (4) einer Basisstation (Node B) eines Funktelekommunikationssystems (1), wobei der oder jeder Basisband-Block (4) mindestens ein Rechengerät (8), insbesondere einen Mikroprozessor, aufweist, **dadurch gekennzeichnet, dass** die Basisband-Verarbeitung in Abhängigkeit von der Auslastung der Rechengeräte (8) der Basisband-Blöcke (4) mindestens einem bestimmten Rechengerät (8) mindestens eines Basisband-Blocks (4) zugewiesen wird.

2. Verfahren nach Anspruch 1, **dadurch gekennzeichnet, dass** die Basisband-Verarbeitung mindestens einem bestimmten Rechengerät (8) mindestens eines bestimmten Basisband-Blocks (4) zugeordnet ist und dass die Basisband-Verarbeitung innerhalb des Basisband-Blocks (4) zumindest teilweise mindestens einem weiteren Rechengerät (8) des Basisband-Blocks (4) zugewiesen wird.

3. Verfahren nach Anspruch 1, **dadurch gekennzeichnet, dass** die Basisband-Verarbeitung mindestens einem bestimmten Rechengerät (8) mindestens eines bestimmten Basisband-Blocks (4) zugeordnet ist und dass die Basisband-Verarbeitung zumindest teilweise mindestens einem Rechengerät (8) mindestens eines weiteren Basisband-Blocks (4) zugewiesen wird.

4. Verfahren nach einem der Ansprüche 1 bis 3, **dadurch gekennzeichnet, dass** die Empfangssignale (2) über mehrere Kanäle übertragen werden, wobei jedem Rechengerät (8) mindestens ein Kanal zugeordnet wird, und dass die Basisband-Verarbeitung eines Kanals zumindest teilweise einem weiteren Rechengerät (8) zugewiesen wird, falls die verfügbare Rechenkapazität des dem Kanal zugeordneten mindestens einen Rechengeräts (8) nicht ausreicht.

5. Verfahren nach Anspruch 4, **dadurch gekennzeichnet, dass** die zu erwartende Auslastung des dem Kanal zugeordneten mindestens einen Rechengeräts (8) vor Beginn der Basisband-Verarbeitung abgeschätzt wird.

6. Verfahren nach Anspruch 4 oder 5, **dadurch gekennzeichnet, dass** die Auslastung des dem Kanal zugeordneten mindestens einen Rechengeräts (8) während der Basisband-Verarbeitung überwacht wird.

7. Basisstation (Node B) eines Funktelekommunikationssystems (1), umfassend mindestens einen Hochfrequenz (HF)-Block (3) zum Verarbeiten anaolger Signale und mehrere Basisband-Blöcke (4) zum Verarbeiten digitaler Signale, wobei die Basisband-Blöcke (4) jeweils mindestens ein Rechengerät (8), insbesondere einen Mikroprozessor, aufweisen, **dadurch gekennzeichnet, dass** die Basisstation (Node B) erste Mittel zum Bestimmen der Auslastung der Rechengeräte (8) der Basisband-Blöcke (4) und zweite Mittel zum Zuweisen von zur Basisband-Verarbeitung anstehenden Empfangssignalen an mindestens ein Rechengerät (8) mindestens eines Basisband-Blocks (4) aufweist, wobei die Zuweisung in Abhängigkeit von der Auslastung der Rechengeräte (8) erfolgt.

8. Basisstation (Node B) nach Anspruch 7, **dadurch gekennzeichnet, dass** die Rechengeräte (8) der Basisband-Blöcke (4) über Hochgeschwindigkeitsschnittstellen (11) miteinander in Verbindung stehen.

9. Basisstation (Node B) nach Anspruch 7 oder 8, **dadurch gekennzeichnet, dass** die zweiten Mittel als eine Kontrolleinheit ausgebildet sind, die die zur Basisband-Verarbeitung anstehenden Empfangssignale (2) in einen Speicherbereich (13) mindestens eines Rechengeräts (8) mindestens eines Basisband-Blocks (4) leitet.

10. Funktelekommunikationssystem (1) umfassend eine Vielzahl von mobilen Funkeinheiten (MF), mehrere Basisstationen (Node B), die in einem Funkkontakt mit den mobilen Funkeinheiten (MF) stehen, und mindestens eine Steuerungsvorrichtung (RNC) zum Steuern des Funktelekommunikationssystems (1), die mit den Basisstationen (Node B) in Verbindung steht, **dadurch gekennzeichnet, dass** zumindest eine der Basisstationen (Node B) nach einem der Ansprüche 7 bis 9 ausgebildet ist.
